# EUROPÄISCHE PATENTSCHRIFT

(11) **EP 1 543 309 B1**
(45) Veröffentlichungstag und Bekanntmachung des Hinweises auf die Patenterteilung: **20.09.2006**
(21) Anmeldenummer: 03747897.1
(22) Anmeldetag: 14.08.2003
(51) Int. Cl.: G01M 3/20

(54) **PRÜFLECKEINRICHTUNG FÜR EINEN SCHNÜFFELLECKSUCHER**
REFERENCE LEAKAGE DEVICE FOR LEAK SNIFFER DETECTOR
DISPOSITIF DE FUITE DE REFERENCE POUR DETECTEUR RENIFLEUR DE FUITE

(30) Priorität: 26.09.2002 DE 10245044; 28.02.2003 DE 10308687
(43) Veröffentlichungstag der Anmeldung: 22.06.2005
(73) Patentinhaber: Inficon GmbH, 50968 Köln (DE)
(72) Erfinder: ROLFF, Randolf, 50169 Kerpen-Horrem (DE)
(74) Vertreter: Leineweber, Jürgen
(86) Internationale Anmeldenummer: PCT/EP2003/009013
(87) Internationale Veröffentlichungsnummer: WO 2004/034008

(56) Entgegenhaltungen:
- DE-A- 3 243 752
- FR-A- 1 343 219
- FR-A- 2 749 079
- US-A- 2 981 091

## Beschreibung

Die Erfindung bezieht sich auf eine Prüfleckeinrichtung für einen Schnüffellecksucher mit einer Schnüffelspitze und mit einer Steuereinheit, wobei die Prüfleckeinrichtung mit einem Gasvorrat und einer Engstelle ausgerüstet ist, aus der zumindest während des Kalibrierens eine definierte Testgasrate ausströmt.

An viele Anlagen und Produkte in Industrie und Forschung werden hohe Anforderungen bezüglich ihrer Dichtheit gestellt. Von der Leckart, Leckrate oder Leckgröße hängt es ab, welches Lecksuchverfahren angewendet bzw. welches Lecksuchgerät eingesetzt wird.

Bei in der Kältemittel-, Automobil- oder anderen Industrien hergestellten Prüflingen oder Baugruppen wird häufig die Schnüffellecksuche eingesetzt. Diese setzt voraus, dass sich im Prüfling oder in der Baugruppe ein Testgas, vorzugsweise unter Überdruck, befindet. Als Testgas wird häufig Helium eingesetzt, das vor dem Verschließen der auf Lecks zu untersuchenden Hohlräume darin eingebracht wird. Bekannt ist auch der Einsatz der ohnehin in Prüflingen oder Baugruppen befindlichen Gase als Testgas, z. B. SF6 oder Halogen-Gase in der Kältemittelindustrie.

Der auf Lecks zu untersuchende Prüfling wird mit Hilfe der Ansaugstelle (Spitze) einer Schnüffelpistole abgetastet, die aus einem eventuell vorhandenen Leck ausströmendes Testgas aufnimmt und einem Testgasdetektor zuführt. Dieser kann sich zusammen mit den anderen Komponenten in einem Gerät befinden, mit dem die Schnüffelpistole u. a. über einen Schlauch in Verbindung steht. Ist der Detektor ausreichend klein (z. B. ein Infrarot-Gasanalysator), kann er auch in der Pistole selbst untergebracht sein, wodurch die Ansprechzeit maßgeblich verkürzt wird.

Testgas-Lecksuchgeräte müssen immer wieder kalibriert werden. Dazu ist der Einsatz von Prüflecks mit einem definierten Leck bekannt. Prüflecks für diese Zwecke umfassen einen Gasvorrat und eine Engstelle mit bekanntem Leitwert. Zur Kalibrierung eines Lecksuchgerätes mit einer Schnüffelpistole wird üblicherweise die Schnüffelspitze in die Nähe der Engstelle gebracht und die Leckanzeige abgeglichen. Aus den deutschen Offenlegungsschriften 27 02 002, 32 43 752 und 199 63 073 sind Test- bzw. Prüflecks dieser Art bekannt.

Prüflecks sollen zum einen über eine möglichst lange Zeit (deutlich länger als ein Jahr) eine konstante Gasströmung haben. Zum anderen müssen sie, wenn sie im Gehäuse eines Lecksuchgerätes untergebracht werden sollen, ausreichend klein gebaut sein. Dieses setzt voraus, dass sich das Testgas unter hohem Druck (8 bar und mehr) im Prüfleck befindet. Prüflecks dieser Art sind temperatur-empfindlich. Dieses gilt insbesondere dann, wenn das Testgas bei den genannten Drücken flüssig ist. Eine maximale Temperatur darf aus Sicherheitsgründen nicht überschritten werden. Der aus Gründen des Bedienungskomforts an sich gewünschte Einbau eines Prüflecks dieser Art in ein Lecksuchgerät mit Wärme erzeugenden Komponenten ist mit Problemen verbunden, häufig sogar nicht möglich.

Bei der Kalibrierung mit einer externen Testleckeinrichtung muss bei den bisherigen Lecksuchern über Menüeingabe die Kalibrierung gestartet und "Leck schnüffeln"/"Luft schnüffeln" bestätigt werden. Dies ist recht umständlich und widerspricht dem Gedanken eines leicht zu bedienenden Gerätes. Dieses gilt vor allem für - häufig ungelernte - Personen, die auf einem Laufband sich bewegende Gegenstände mit einer Schnüffelpistole auf Lecks untersuchen müssen. Sie können sich nicht mit einem von der Bedienung her umständlichen und deshalb zeitlich aufwendigen Kalibriervorgang beschäftigen.

Der vorliegenden Erfindung liegt die Aufgabe zu Grunde, eine externe, d.h. eine von einem Lecksuchgerät separate Prüfleckeinrichtung so zu gestalten, dass sie eine vereinfachte Bedienung des Lecksuchgerätes bei der Durchführung der Kalibrierung erlaubt.

Erfindungsgemäß wird diese Aufgabe durch die kennzeichnenden Merkmale der Patentansprüche gelöst. Durch diese Maßnahmen wird erreicht, dass lediglich dadurch, dass die Schnüffelspitze in die Nähe der Engstelle der Prüfleckeinrichtung gebracht wird, die Kalibrierung des separat von der Prüfleckeinrichtung aufgestellten Lecksuchgerätes durchgeführt werden kann.

Weitere Vorteile und Einzelheiten der Erfindung sollen an Hand von in den Figuren 1 bis 3 schematisch dargestellten Ausführungsbeispielen erläutert werden. Es zeigen
- Figur 1 ein Schnüffel-Lecksuchgerät mit darin eingebauten Komponenten,
- Figur 2 einen Schnitt durch ein Ausführungsbeispiel für eine separate Prüfleckeinrichtung nach der Erfindung und
- Figur 3 ein Flussdiagramm.

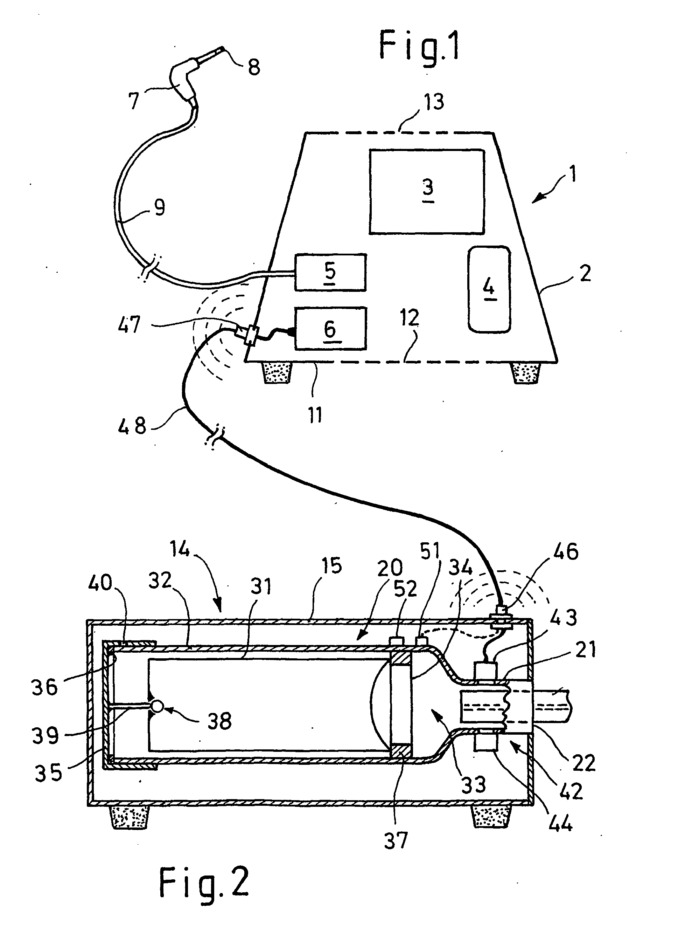

Das in Figur 1 dargestellte Lecksuchgerät 1 besitzt ein Gehäuse 2, in dem sich Geräte-Komponenten befinden. Als Blöcke dargestellt sind beispielsweise eine Vakuumpumpe 3, ein Netzteil 4, ein Gasdetektor 5 und eine Steuerungseinheit 6. Außerhalb des Gehäuses befindet sich die Schnüffelpistole 7 mit ihrer Ansaugstelle (Spitze) 8. Sie ist über einen Schlauch 9 mit dem Gasdetektor 5 verbunden. Für den Fall, dass der Gasdetektor 5 in der Schnüffelpistole 7 untergebracht ist, steht diese mit der Steuereinheit über Signalleitungen in Verbindung. Sämtliche Gerätekomponenten sind im Gehäuse 2 untergebracht. Das Gehäuse 2 selbst ist im Bereich des Bodens 11 und im oberen Bereich mit Kühllufteintrittsöffnungen 12 bzw. Luftschlitzen 13 ausgerüstet. Da zumindest ein Teil der Gerätekomponenten Wärme erzeugen, findet ein durch Thermik erzeugter Kühlluftstrom statt. Sollte dieser nicht ausreichen, kann zusätzlich ein den Kühlluftstrom unterstützender Ventilator vorgesehen sein.

Figur 2 zeigt ein Ausführungsbeispiel für eine Prüfleckeinrichtung 14 nach der Erfindung. Sie besitzt ein Gehäuse 15, in dem sich das eigentliche Prüfleck 20 - in im einzelnen nicht näher dargestellter Weise herausnehmbar - befindet. Das Testleck 20 weist einen Rohranschluß 21 auf, der durch das Gehäuse 15 nach außen mündet. Der Rohranschluß 21 bildet eine üblicherweise ständig offene Verbindung zwischen der weiter unten noch im Detail beschriebenen Engstelle des Prüflecks 20 und einer für die Einführung der Schnüffelspitze 8 geeigneten Öffnung 22. Diese Anordnung ermöglicht jederzeit die Kalibrierung des Lecksuchgerätes 1.

Das Prüfleck 20 besitzt einen inneren Druckbehälter 31 mit dem Gasvorrat. Dabei handelt es sich um eine handelsübliche Druckdose, die das gewünschte Testgas in flüssiger Form enthält. Der Druck in gefüllten Kartuschen dieser Art ist stark temperaturabhängig. Er darf üblicherweise 8 bar (Prüfdruck 12 bar) nicht überschreiten. Die maximale Temperatur, die Druckdosen dieser Art üblicherweise annehmen dürfen, ist auf 50° C begrenzt.

Um dennoch Druckbehälter dieser Art auch bei zeitweise höheren Umgebungstemperaturen als Gasvorrat bei Prüflecks einsetzen zu können, ist ein zweites äußeres Gehäuse 32 vorgesehen. Es besteht beispielsweise aus Stahl und ist für wesentlich höhere Drücke als 8 (bzw. 12) bar ausgelegt. Es weist im Bereich einer Stirnseite die Engstelle 33 auf, die als Membran 34 ausgebildet ist. Daran schließt sich der bereits erwähnte Rohranschluss 21 an. Im Bereich der anderen Stirnseite ist eine lösbare, vorzugsweise abschraubbare Kappe 35 vorgesehen. Sie ermöglicht es, das von der Kappe lösbare Gehäuse 32 dicht zu verschließen. Zwischen seiner stirnseitigen Öffnung und der Kappe 35 befindet sich ein Dichtring 36. Nach dem Abnehmen der Kappe 35 ist das Innere des Gehäuses 32 für Einsatz oder Entnahme des Druckbehälters 31 zugänglich.

Im Bereich der der Kappe 35 gegenüberliegenden Stirnseite ist das Gehäuse 32 mit einem nach innen ragenden Flansch 37 ausgerüstet. Dieser Flansch trägt auf seiner dem Rohranschluß 21 zugewandten Seite die Membran 34. Auf der der Kappe 35 zugewandten Seite des Flansches 37 stützt sich der in das Gehäuse 32 eingesetzte Druckbehälter 31 ab.

Bei dem in Figur 2 dargestellten Ausführungsbeispiel ist der Druckbehälter 31 mit einem Kugelventil 38 ausgerüstet, das sich in einer seiner Stirnseiten befindet. Der Druckbehälter 31 wird derart in das Gehäuse 32 eingesetzt, dass das Ventil 38 der Kappe 35 zugewandt ist. Die Kappe 35 ist mit einem dem Ventil 38 zugeordneten Stift 39 ausgerüstet, dessen Länge so gewählt ist, dass er das Ventil 38 bei vollständig aufgeschraubter Kappe 35 öffnet. Wird ein Druckbehälter ohne Ventil 38 verwendet, ist an Stelle des Stiftes 39 ein Dorn vorgesehen, der den Druckbehälter 31 mit dem Verschließen der Kappe 35 mit einer Öffnung versieht. Nach dem Verschließen der Kappe ist entweder das Ventil 38 offen oder die vom Dorn hergestellte Öffnung vorhanden, so daß das Testgas in das Gehäuse 32 strömt. Maßgebend für die Temperaturbelastung ist dann nicht mehr der Druckbehälter 31 sondern das Gehäuse 32.

Ist ein Auswechseln des Druckbehälters 31 erforderlich, wird das Prüfleck 20 aus dem Gehäuse 15 der Prüfleckeinrichtung 14 herausgenommen. Danach wird das Gehäuse 32 durch Abschrauben der Kappe 35 geöffnet. Der Rand der Kappe 35 ist in der Nähe seiner Oberseite mit einer kleinen Bohrung 40 ausgerüstet. Diese erlaubt es, dass vor dem endgültigen Abschrauben der Kappe 35 ein Druckausgleich zwischen dem Inneren des Gehäuses 32 und der Umgebung stattfindet.

Der besondere Vorteil des erfindungsgemäßen Prüflecks besteht darin, dass das druckstabile Gehäuse 32 nicht gewechselt werden muß. Es kann in Bezug auf seine Stabilität den gewünschten Anforderungen entsprechend ausgebildet sein. Nur beim Transport und bei der Lagerung des Druckbehälters 31 müssen die relativ niedrigen Umgebungstemperaturen beachtet werden. Auch die Engstelle (Membran 34) selbst gehört nicht zu einem Wegwerfprodukt. Damit ist der Vorteil verbunden, dass sich die Prüfleck-Leckrate beim Wechseln des Gasvorrates nicht ändert.

Erfindungsgemäß ist das Testleck 20 der Testleckeinrichtung mit einem Sensor 42 ausgerüstet, der erkennt, wenn sich eine Schnüffelspitze 8 im Rohranschluß 21 befindet. Der Sensor 42 kann z.B. ein Reedkontakt oder ähnlicher Kontakt sein. Beim dargestellten Ausführungsbeispiel ist der Sensor als Lichtschranke ausgebildet. Dazu ist der Rohranschluß 21 mit zwei einander gegenüberliegenden Öffnungen versehen, denen eine Lichtquelle 43 (z.B. eine Leucht-Diode) und ein lichtempfindliches Bauteil 44 (z.B. eine Foto-Diode) zugeordnet sind.

Zwischen dem Sensor 42 und dem Lecksuchgerät 1 muß eine Verbindung bestehen, die es ermöglicht, Sensorsignale der Steuereinrichtung 6 des Lecksuchgerätes 1 zuzuführen. Dargestellt sind Stecker 46, 47 an den Gehäusen 2 bzw. 15 sowie eine Kabelverbindung 48. Besonders vorteilhaft ist es, wenn eine drahtlose Verbindung besteht. z.B. ein im einzelnen nicht dargestellter Sender im Prüfleck 14 und ein Empfänger im Lecksuchgerät 1. Diese Verbindung ermöglicht die Kalibrierung mehrerer, an unterschiedlichen Orten aufgestellter Lecksuchgeräte mit nur einer Prüfleckeinrichtung.

Besonders zweckmäßig ist es, das Prüfleck 20 in der Nähe seiner Engstelle mit einem Temperatursensor 51 auszurüsten und über die Verbindung zwischen dem Prüfleck 20 und dem Lecksuchgerät 1 - sei sie drahtlos oder eine Kabelverbindung - auch Signale des Temperatursensors 51 zur Steuereinheit 6 zu übertragen. Diese Maßnahmen erlauben es, die temperaturabhängige Durchlässigkeit der Engstelle 33 des Prüflecks 20 bei der Kalibrierung der Leckanzeige zu berücksichtigen. Insbesondere bei Prüflecks mit einer Membran als Engstelle ist diese Berücksichtigung von Bedeutung, da die Durchlässigkeit der Membran exponentiell temperaturabhängig ist. Um nun eine sichere Kalibrierung des Lecksuchers zu erreichen, wird die Temperaturabhängigkeit des Testlecks durch eine in der Software des Geräts (Steuereinheit 6) abgelegte Korrekturkurve kompensiert. Die Temperatur wird im Bereich des Prüflecks gemessen.

Zweckmäßig ist das Prüfleck 20 neben dem Temperatursensor 51 noch mit einem EEPROM ausgerüstet. In Figur 2 ist das EEPROM schematisch angedeutet und mit 52 bezeichnet. Wenn im EEPROM Produktionsdatum, Füllmenge sowie Leckrate abgespeichert sind, kann daraus der Zeitpunkt abgeschätzt werden, wann das Reservoir sich geleert hat und das Prüfleck 20 daher ausgetauscht werden muss. Steht auch das EEPROM 52 mit der Steuereinheit 6 in Verbindung, kann dieser Zeitpunkt im Display des Lecksuchers angezeigt werden.

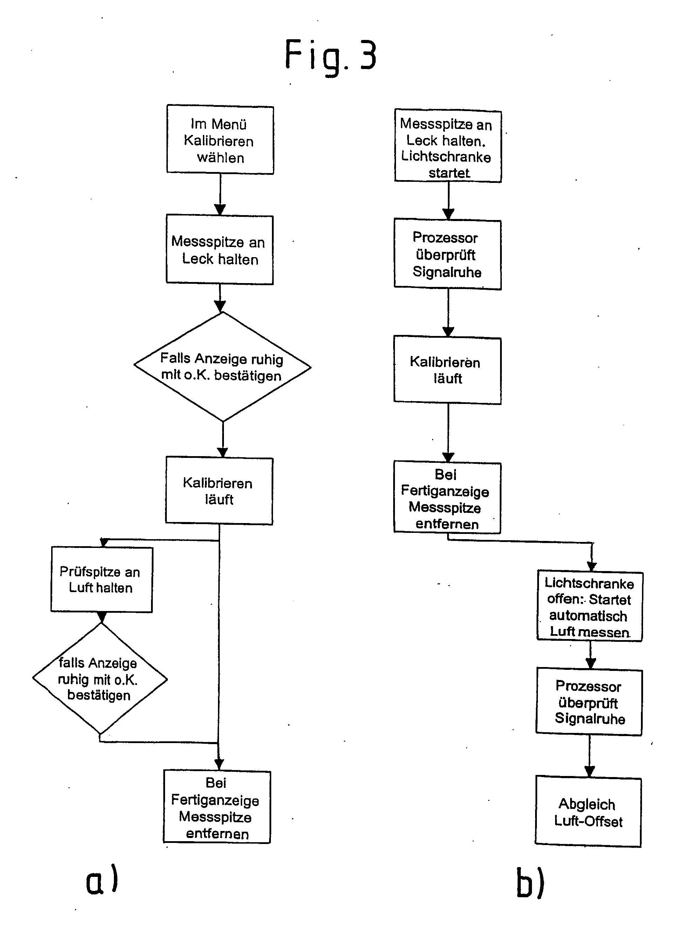

Figur 3 zeigt Flussdiagramme für die Durchführung der Kalibrierung mit Geräten nach dem Stand der Technik (Fig. 3a) und mit Hilfe einer Prüfleckeinrichtung nach der Erfindung (Fig. 3b). Aus dem Vergleich der Flussdiagramme ergibt die mit der Erfindung verbundene Vereinfachung der Kalibrierung.

## Patentansprüche

1. Prüfleckeinrichtung (14) für einen Schnüffellecksucher (1) mit einer Schnüffelspitze (8) und mit einer Steuereinheit (6), wobei die Prüfleckeinrichtung (14) mit einem Gasvorrat (31) und einer Engstelle (33) ausgerüstet ist, aus der zumindest während des Kalibrierens eine definierte Testgasrate ausströmt, **dadurch gekennzeichnet, dass** sich im Bereich der Engstelle (33) ein die Annäherung der Schnüffelspitze (8) erkennender Sensor (42) befindet und dass sie mit Mitteln zur Übertragung von Sensorsignalen zur Steuereinheit (6) des Lecksuchers (1) ausgerüstet ist.

2. Einrichtung nach Anspruch 1, **dadurch gekennzeichnet, dass** die Übertragungsmittel als Kabelverbindung (48) ausgebildet sind.

3. Einrichtung nach Anspruch 1, **dadurch gekennzeichnet, dass** die Übertragungsmittel eine drahtlose Übertragung erlauben und auf Seiten des Prüflecks (14) zumindest aus einem Sender bestehen.

4. Einrichtung nach einem der Ansprüche 1 bis 3, **dadurch gekennzeichnet, dass** ihre Engstelle (33) eine Membran (34) ist.

5. Einrichtung nach Ansprüche 1 bis 4, **dadurch gekennzeichnet, dass** sie einen Temperatursensor (51) aufweist.

6. Einrichtung nach einem der Ansprüche 1 bis 5, **dadurch gekennzeichnet, dass** sie mit einem Rohranschluss (21) ausgerüstet ist, der durch das Gehäuse (15) nach außen tritt und eine für die Einführung der Ansaugstelle (8) einer Schnüffelpistole (7) geeignete Öffnung (22) aufweist.

7. Einrichtung nach einem der Ansprüche 1 bis 6, **dadurch gekennzeichnet, dass** sich der Gasvorrat in einem Druckbehälter (31) befindet, dass ein den Druckbehälter (31) aufnehmendes Gehäuse (32) vorgesehen ist und dass die Engstelle (33) Bestandteil des Gehäuses (32) ist.

8. Einrichtung nach Anspruch 7, **dadurch gekennzeichnet, dass** Druckbehälter (31) und Gehäuse (32) zylindrisch sind, dass sich die Engstelle (33) im Bereich einer der beiden Stirnseiten des Gehäuses (32) befindet und dass die der Engstelle (33) gegenüberliegende Stirnseite des Gehäuses (32) mit einer lösbaren, vorzugsweise abschraubbaren Kappe (35) ausgerüstet ist.

9. Einrichtung nach Anspruch 8, **dadurch gekennzeichnet, dass** das Gehäuse (32) im Bereich der der Kappe (35) gegenüberliegenden Stirnseite mit einem nach innen ragenden Flansch (37) ausgerüstet ist, auf dem sich der den Gasvorrat enthaltende Druckbehälter (31) abstützt.

10. Einrichtung nach Anspruch 8 oder 9, **dadurch gekennzeichnet, dass** der Druckbehälter (31) im Bereich der Kappe (35) mit einem Kugelventil (38) ausgerüstet ist und dass die Kappe (35) einen Stift (39) trägt, der das Ventil (38) bei aufgeschraubter Kappe (35) öffnet.

11. Einrichtung nach Anspruch 8 oder 9, **dadurch gekennzeichnet, dass** die Kappe (35) einen nach innen gerichteten Dorn trägt, der bei aufgeschraubter Kappe (35) den Druckbehälter (31) durchstößt.

12. Einrichtung nach Anspruch 8, 9, 10 oder 11, **dadurch gekennzeichnet, dass** der Rand der Kappe (35) im Bereich seiner Oberseite mit einer Bohrung (40) ausgerüstet ist.

13. Einrichtung nach Anspruch 9 und einem der übrigen Ansprüche, **dadurch gekennzeichnet, dass** der Flansch (37) die Membran (34) trägt.

14. Einrichtung nach einem der vorhergehenden Ansprüche, **dadurch gekennzeichnet, dass** sie weiterhin mit einem EEPROM ausgerüstet ist, in dem Gasart, Produktionsdatum, Füllmenge und/oder Leckrate abgespeichert sind.

15. Einrichtung nach Anspruch 1, 5 und/oder 14, **dadurch gekennzeichnet, dass** die Mittel zur Übertragung der Signale des Sensors (42) so ausgebildet sind, dass sie auch die Übertragung der vom Temperatursensor (51) und/oder vom EEPROM (52) gelieferten Signale geeignet sind.

## Claims

1. A leak-testing device (14) for a sniffing leak detector (1) with a sniffing tip (8) and with a control unit (6), said leak-testing device (14) being equipped with a gas reserve (31) and with a bottleneck (33) from which a defined rate of flow of test gas emerges, at least during calibration, **characterised in that** a sensor (42) which detects the approach of the sniffing tip (8) is located in the region of the bottleneck (33), and **in that** said device is equipped with means for transmitting sensor signals to the control unit (6) of the leak detector (1).

2. Device according to Claim 1, **characterised in that** the transmission means take the form of a cable connection (48).

3. Device according to Claim 1, **characterised in that** the transmission means permit wireless transmission and on the side of the leak tester (14) consist at least of a transmitter.

4. Device according to one of Claims 1 to 3, **characterised in that** its bottleneck (33) is a diaphragm (34).

5. Device according to one of Claims 1 to 4, **characterised in that** it has a temperature sensor (51).

6. Device according to one of Claims 1 to 5, **characterised in that** it is equipped with a pipe connection (21) which emerges outwards through the housing (15) and has an opening (22) which is suitable for the introduction of the intake point (8) of a sniffer gun (7).

7. Device according to one of Claims 1 to 6, **characterised in that** the gas reserve is located in a pressure vessel (31), **in that** a housing (32) accommodating the pressure vessel (31) is provided, and **in that** the bottleneck (33) is an integral part of the housing (32).

8. Device according to Claim 7, **characterised in that** the pressure vessel (31) and the housing (32) are cylindrical, **in that** the bottleneck (33) is located in the region of one of the two end faces of the housing (32), and **in that** the end face of the housing (32) situated opposite the bottleneck (33) is equipped with a releasable, preferably unscrewable cap (35).

9. Device according to Claim 8, **characterised in that** in the region of the end face situated opposite the cap (35) the housing (32) is equipped with an inward-protruding flange (37) on which the pressure vessel (31) containing the gas reserve is supported.

10. Device according to Claim 8 or 9, **characterised in that** in the region of the cap (35) the pressure vessel (31) is equipped with a ball valve (38), and **in that** the cap (35) bears a pin (39) which opens the valve (38) when the cap (35) is screwed on.

11. Device according to Claim 8 or 9, **characterised in that** the cap (35) bears an inward-directed spike which pierces the pressure vessel (31) when the cap (35) is screwed on.

12. Device according to Claim 8, 9, 10 or 11, **characterised in that** the rim of the cap (35) is equipped with a bore (40) in the region of its upper side.

13. Device according to Claim 9 and one of the other claims, **characterised in that** the flange (37) bears the diaphragm (34).

14. Device according to one of the preceding claims, **characterised in that** it is further equipped with an EEPROM in which gas-type, production date, capacity and/or leakage-rate have been stored.

15. Device according to Claims 1, 5 and/or 14, **characterised in that** the means for transmitting the signals of the sensor (42) are designed in such a way that they are also suitable for the transmission of the signals supplied by the temperature sensor (51) and/or by the EEPROM (52).

## Revendications

1. Dispositif de contrôle de fuites (14) pour un système de recherche de fuites par reniflement (1) comprenant un bec de reniflement (8) et une unité de commande (6), le dispositif de contrôle de fuites (14) étant muni d'un réservoir de gaz (13) et d'un goulot (33) duquel s'écoule, au moins pendant le calibrage, un débit de gaz de test défini, **caractérisé en ce qu'**un capteur (42) détectant un rapprochement du bec de reniflement (8) se trouve à proximité du goulot (33) et **en ce que** le dispositif est muni de moyens pour transmettre des signaux de capteur vers l'unité de commande (6) du système de recherche de fuites (1).

2. Dispositif selon la revendication 1, **caractérisé en ce que** les moyens de transmission sont réalisés sous la forme d'une liaison câblée (48).

3. Dispositif selon la revendication 1, **caractérisé en ce que** les moyens de transmission permettent une transmission sans fil et se composent d'au moins un émetteur sur un côté du dispositif contrôle de fuites (14).

4. Dispositif selon l'une quelconque des revendications 1 à 3, **caractérisé en ce que** son goulot (33) est une membrane (34).

5. Dispositif selon les revendications 1 à 4, **caractérisé en ce qu'**il présente un capteur de température (51).

6. Dispositif selon l'une quelconque des revendications 1 à 5, **caractérisé en ce qu'**il est muni d'un raccord tubulaire (21) qui traverse le boîtier (15) vers l'extérieur et présente une ouverture (22) appropriée à l'introduction de la partie d'aspiration (8) d'un pistolet de reniflement (7).

7. Dispositif selon l'une quelconque des revendications 1 à 6, **caractérisé en ce que** le réservoir de gaz se trouve dans un récipient sous pression (31), **en ce qu'**un boîtier (32) est prévu pour recevoir le récipient sous pression (31) et **en ce que** le goulot (33) est un composant du boîtier (32).

8. Dispositif selon la revendication 7, **caractérisé en ce que** le récipient sous pression (31) et le boîtier (32) sont cylindriques, **en ce que** le goulot (33) se trouve au niveau de l'une des deux faces frontales du boîtier (32) et **en ce que** la face frontale du boîtier (32) opposée au goulot (33) est munie d'un capuchon (35) amovible, de préférence dévissable.

9. Dispositif selon la revendication 8, **caractérisé en ce** le boîtier (32) est muni, au niveau de la face frontale opposée au capuchon (35), d'une bride (37) dépassant vers l'intérieur, sur laquelle s'appuie le récipient sous pression (31) contenant le réservoir de gaz.

10. Dispositif selon la revendication 8 ou 9, **caractérisé en ce que** le récipient sous pression (31) est muni, au niveau du capuchon (35), d'une soupape sphérique (38) et **en ce que** le capuchon (35) porte une goupille (39) ouvrant le clapet (38) lorsque le capuchon (35) est dévissé.

11. Dispositif selon la revendication 8 ou 9, **caractérisé en ce que** le capuchon (35) porte une broche orientée vers l'intérieur qui s'enfonce dans le récipient sous pression (31) lorsque le capuchon (35) est dévissé.

12. Dispositif selon la revendication 8, 9, 10 ou 11, **caractérisé en ce que** le bord du capuchon (35) est muni d'un alésage (40) au niveau de sa face supérieure.

13. Dispositif selon la revendication 9 et l'une des revendications restantes, **caractérisé en ce que** la bride (37) porte la membrane (34).

14. Dispositif selon l'une quelconque des revendications précédentes, **caractérisé en ce qu'**il est en outre muni d'une mémoire EEPROM dans laquelle le type de gaz, la date de production et la quantité de remplissage et/ou le débit de fuite sont enregistrés.

15. Dispositif selon la revendication 1, 5 et/ou 14 **caractérisé en ce que** les moyens de transmission des signaux du capteur (42) sont formés de manière à être également appropriés pour transmettre les signaux émis par le capteur de température (51) et/ou la mémoire EEPROM (52).
